# EUROPEAN PATENT SPECIFICATION

(11) **EP 1 418 568 B1**
(45) Date of publication and mention of the grant of the patent: **10.01.2007**
(21) Application number: 02392017.6
(22) Date of filing: 07.11.2002
(51) Int. Cl.: G09G 3/36

(54) **Method and system for saving power in row driver circuits for monochrome liquid crystal displays**
Verfahren und System zum Einsparen von Energie in Zeilentreiberschaltkreisen für monochrome Flüssigkristallanzeigen
Méthode et système pour économiser d'énergie en circuits de commande de rangées pour affichages monochrome à cristaux liquides

(43) Date of publication of application: 12.05.2004
(73) Proprietor: Dialog Semiconductor GmbH, 73230 Kirchheim/Teck-Nabern (DE)
(72) Inventor: Tyrell, Julian, Cricklade, Swindon SN6 6LU (GB); Clewett, Dave, Wooton Bassett, Wiltshire SN4 8QD (GB)
(74) Representative: Schuffenecker, Thierry

(56) References cited:
- WO-A-98/44480
- US-A- 4 604 617
- US-A- 6 037 919

## Description

### Technical field

This invention relates generally to Liquid Crystal Displays (LCD), and more particularly to a method and a circuit to reduce power consumption of a LCD driver IC.

### Background art

Liquid crystal displays (LCD) use nematic liquid crystals. The molecular order in a nematic liquid crystal, which results from weak intermolecular forces, is easily disrupted. For this reason, the liquid crystals flow like an ordinary liquid. Because of the weakness of the intermolecular forces, the molecules in a nematic phase are easily realigned along new directions.

A liquid crystal display uses this ease of molecular reorientation to change areas of the display from light to dark, resulting in patterns that you see in the display. The display consists of liquid crystals contained between glass plates whose interior surfaces are treated to align the molecules in a given direction. When the voltage to a set of electrodes in some area of the display is turned on, the molecules of the liquid crystal in that area reorient along a new direction. When this voltage is turned off, the molecules return to their original orientation.

LCD's require an AC drive voltage with virtually no DC component. Prolonged DC operation may cause electrochemical reactions inside the display, which will cause significantly reduced life. It is essential that the voltage waveform across the glass plates of the display be maintained at an average DC value of zero because the glass is likely to suffer a break-down if a non-zero DC voltage is applied for any sustained period of time. There is threshold behaviour for most LCD's and no change in transmission occurs until a threshold voltage, Vth, is reached. Transmission then decreases as the voltage increases until saturation is reached. Threshold voltage is typical 1.5 - 2.5 volts, and saturation occurs at about 4-5 volts.

The pixels across each horizontal "common" row of a LCD are connected together on the plate on one side of the liquid crystal film, and all the pixels in each vertical "segment" column are connected on the opposite side. The "commons" are then addressed serially by setting all the column voltages separately for each "common" and then turning on the "common" voltages in sequence.

Principally LCD's require a differential voltage greater than the threshold voltage Vth of the nematic fluid between two conducting layers to generate an "ON" pixel. The display consists of a matrix of pixels created by vertical "segment" (SEG) and horizontal "common" (COM) conductive layer either side of the nematic fluid. The display has the electrical characteristics of a capacitor, so requiring a "charging" current every time a "segment" and/or "common" are switched.

In order to display a whole picture the "commons" are scanned in sequence and the segments switched appropriately. This is done so that the applied root-mean-square (RMS) voltage between each common and segment is controlled to be greater ("ON") or less than ("OFF") the threshold voltage **Vth** of the display.

The data for the display is contained in a random access memory (RAM), which is typically structured to be the same as the display. For example, a display of 80 segments and 64 commons would have a RAM of 80 by 64 bits. The display scan reads a row of the RAM for each active common output.

Currently available driver IC's continually switch the LCD regardless of the displayed data. This causes a switching waveform, and hence power supply current, to be required through the whole display. This causes power consumption even if there is no change of data.

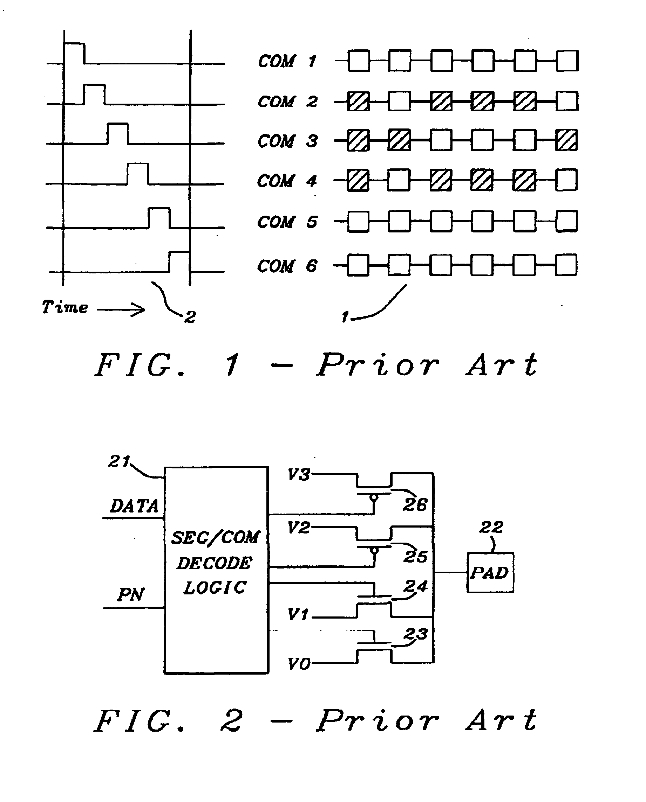

**Fig. 1** prior art shows a simple display comprising 6 segments and 6 commons. The waveforms **2** show the sequencing of the commons over time during a display scan. The matrix **1** on the right shows the 36 pixels. The black rectangles represent "ON" pixels, the white rectangles represent "OFF" pixels. All the 6 commons are selected, independent if all pixels in a row are "OFF" or not. In the example of **Fig. 1** prior art e.g. the rows 1, 5 and 6 are blank, this means all pixels are "OFF". Nevertheless all commons got selected for sequencing of the pulses **2**.

**Fig. 2** prior art shows a basic circuit of a typical COM/SEG decode logic-generating signals to the pad control circuitry **22.** Pad refers to the input to the LCD glass. The input to said SEG/COM decode logic **21** is data read out from a RAM and the PN signal. PN (Positive/Negative) refers to a signal to change the polarity between the Common and the Segment pad and is switching regularly between "0" and "1" to ensure that an average DC value of zero is achieved. The output of said SEG/COM decode logic **21** activates one of the four symmetric voltages V0 - V3. Four transistors **23, 24, 25 and 26** perform the switching. The signal generated is linked to the related pad providing input to the LCD glass.

The following table shows related decode logic of said driver **21**. The table shows which one of the four output voltages V0 to V3 is applied depending on the input values of data and PN:

| DATA | PN | SEG | COM |
|---|---|---|---|
| 0 | 0 | V1 | V2 |
| 1 | 0 | V3 | V0 |
| 0 | 1 | V2 | V1 |
| 1 | 1 | V0 | V3 |

For example, if the data is "1" either SEG or COM is at the maximum voltage V3, dependent on the value of the polarity signal PN and the related pixel is "lit".

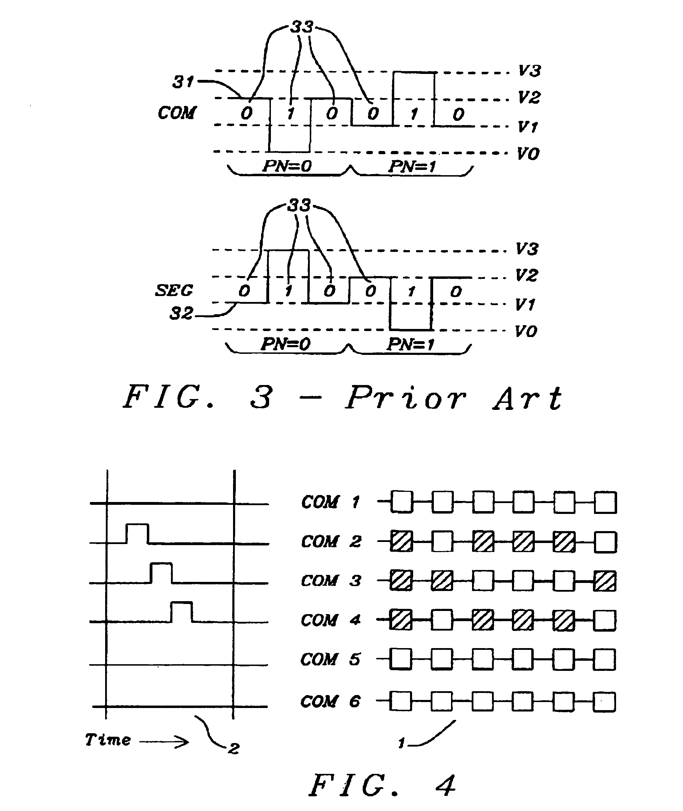

As another example of a typical implementation **Fig. 3** prior art shows the COM and SEG voltage waveforms for a simple Super Twisted Nematic (STN) LCD display; where the outputs switch one of four symmetric voltages as it has been shown **by Fig. 2** prior art.
The curve **31** shows the waveform of the COMMON voltage, the curve **32** shows the waveform of the SEGMENT voltage. The related pixels **33** are lit ("1") if either the COM signal or the SEG signal is at the maximum value **V3**.

U. S. Patent (5,825,343 to Moon) describes a driving device and a method of driving a TFT-LCD using a two-pulse electrode voltage to thereby double the duration of the driving impulse. The driving device includes a liquid crystal interface IC that outputs a two-pulse start signal and a clock signal. A gate bus driver IC outputs a two-pulse gate electrode voltage to each gate line according to the start signal inputted from the liquid crystal interface IC and a liquid crystal pixel is driven by the difference in potential between a grey voltage and a common electrode voltage.

U. S. Patent (5,986,631 to Nanno et al.) discloses a driving method of an active matrix LCD. According to this method, a scan signal has three voltages levels, i.e., an ON voltage, an OFF voltage and a compensation voltage having the opposite polarity with respect to the OFF voltage. In contrast with the conventional capacitively coupled driving method in which the scan signal consists of four voltages, the driving method of this invention can reduce a cost and power consumption for a driver IC without degradation due to flickers or other causes.

U. S. Patent (6,232,944 to Kumagawa et al.) shows a compact and inexpensive LCD by improving a drive method for compensating a cross-talk using a compensating pulse added to a signal voltage so that a drive IC and a periphery of the LCD panel are reduced in size. Only one of positive and negative compensating pulses is added in accordance with a predetermined period. The compensating pulse preferably has a waveform including low frequency components. A width or a height of the compensating pulse varies in accordance with a location of the signal electrode, display pattern or other factors.

US6037919 discloses an electronic video display system having a video controller device, a video memory device, a video pattern file, video display driver devices, a video display panel, and a means for controlling the video refresh rate in order to improve the displayed video image are described. Redundant information in a line of the display is written simultaneously rather than sequentially.

### Summary of the Invention

The principal object of the present invention is to reduce the power consumption of a LCD driver IC.

This object is achieved by the method and apparatus as defined in claims 1 and 6, respectively.

In accordance with the objects of this invention a method to reduce the current consumption of a LCD driver IC by avoiding COMMON output to LCD rows having all blanks has been achieved. Said method comprises first providing a display data RAM, a means to detect an all-zero condition in a COMMON row, a SEGMENT decode block, SEGMENT pads, COMMON pads, a COMMON decode block, a COMMON logic block and a control logic block. The steps of said method are to select a COMMON row number according to any defined sequence, to read COMMON rows selected from RAM, to check if the data of COMMON row selected row contains all zeros, if the data of selected COMMON row is all zero, to go back to read next the COMMON row, or if the data of selected row number is not all zero switch common row selected and go back to read next COMMON ROW.

In accordance with the objects of this invention a system to reduce the power consumption of a LCD driver IC by avoiding COMMON output to LCD rows having all blanks is achieved. Said system comprises first a display data RAM containing the data to be displayed on a LCD being controlled by a control logic block and providing output to a means of detecting an all-zero condition in a COMMON row selected, a control logic block controlling the overall display of the data stored in said display data RAM and a means to detect an all-zero condition in a COMMON row selected by said control logic block providing information to a COMMON logic block and a to a SEGMENT decode block. Furthermore said system comprises a COMMON logic block having an input and an output wherein said input is from said means to detect an all-zero condition and from said control logic block and the output is controlling a COMMON decode block, a COMMON decode block receiving signals from said COMMON logic block and providing signals to COMMON pads, a SEGMENT decode block receiving signals from said means to detect an all-zero condition and providing signals to SEGMENT pads. Finally said system comprises SEGMENTS pads to control the SEGMENTS of a LCD-display and COMMON pads to control the COMMONS of a LCD display.

### Description of the drawings

In the accompanying drawings forming a material part of this description, there is shown:
Fig. 1 prior art illustrates a simple 6 segment and 6 common display with a displayed picture including waveforms showing the sequencing of the commons during a display scan.
Fig. 2 prior art shows a circuit of a typical COM/SEG decode logic-generating signals to the pad control circuitry.
Fig. 3 prior art shows the COM and SEG voltage waveforms for a simple Super Twisted Nematic (STN) LCD display.
Fig. 4 illustrates a simple 6 segment and 6 common display with a displayed picture including waveforms showing the invented sequencing of the commons during a display scan.
Fig. 5 shows the segment pad structure and the invented "ALL-ZERO" data detection.
Fig. 6 shows the COM pad structure including the "blanking" invented
Fig. 7 shows a flowchart of the method illustrating how on detection of no data change the output pins were kept static.
Fig. 8 shows a block diagram of the system invented

### Description of the preferred embodiment

The preferred embodiments disclose a method and a circuit to reduce the power consumption of an LCD driver IC.

In prior art available driver IC's continually switch the LCD regardless of the displayed data. **Fig. 1** prior art shows that, although all pixels in some rows were "OFF", corresponding common output in said rows was selected. In order to save power consumption in the LCD driver IC, logic circuitry between the RAM and the segment output detects if the data for the selected row is all zero's (implying that all pixels are off).

In case if the data of a row are all zero's the corresponding common output is not selected. This leaves all of the driver pins at the "OFF" state and does not switch the display and hence does not charge/discharge the capacitance of the display. This technique will automatically reduce the driver pins switching when the LCD is used in a partial mode, i.e. where one part or several parts contain one or more blank rows. However the scan rate of the display remains constant and this maintains the correct RMS voltage applied for the "ON" pixels.

**Fig. 4** shows an example display comprising 6 segments and 6 commons. The same configuration has been selected as in **Fig. 1** prior art. The waveforms **2** show the sequencing of the commons over time during a display scan. The matrix **1** on the right shows 36 pixels. The black rectangles represent "ON" pixels, the white rectangles represent "OFF" pixels. Only a few pixels are "lit". In this case the first and the last two common lines (COM1, COM5 and COM6) will not be switched as the RAM contains all zero data for these lines and hence all segments are off. Contrary to prior art the common pins of said blank commons were not switched, hence reducing the power consumption of the LCD driver IC.

As an example of the constant frame rate achieved: a 80 by 64 display has just the central 35 lines containing data, say from 20 to 54 inclusive. The scan starts at line COM1 and detects all zeros contained in the RAM so the common 1 output is NOT selected. This also occurs for lines 2 to 19 inclusive. Lines 20 to 54 are driven as normal as each line contains data. Lines 55 to 64 are also not selected, as these contain no data. The frame rate remains the time taken to complete the 64 line scan, thus giving the same RMS drive voltage regardless of the number of lines containing data.

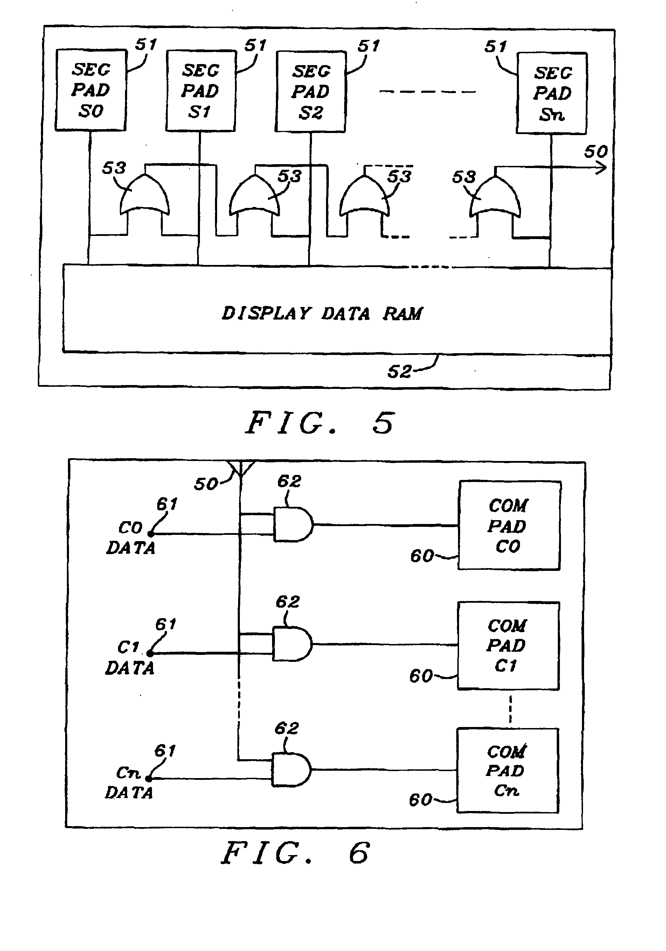

The segment pad structure and "ALL-ZERO" detection of the invention presented is showed in **Fig. 5**. The LCD display data held in the RAM **52** drives the SEG pads **51** ranging from segment zero to segment n. The RAM outputs are logically OR'd by the OR gates **53** together to produce an output signal **50** that indicates 'non-zero' data. When this signal is "1" the related COM output has to be activated, when this signal is "0", no COM output is activated as explained in **Fig. 4.**

**Fig. 6** shows the COM pad structure supporting the "blanking" invented. The common signals are generated by the RAM address logic, which selects the relevant COM pad **60** corresponding to the row of data **61** in the RAM. The signal from the control logic is logically AND'd by the AND gates **62** with the "non-zero" signal **50**, shown in **Fig. 5**, to switch the corresponding COM pad. If said signal **50** is zero, the corresponding COM pad is not switched, all of the driver pins are left in the "OFF" state and hence the capacitance of the display are not being charged/discharged.

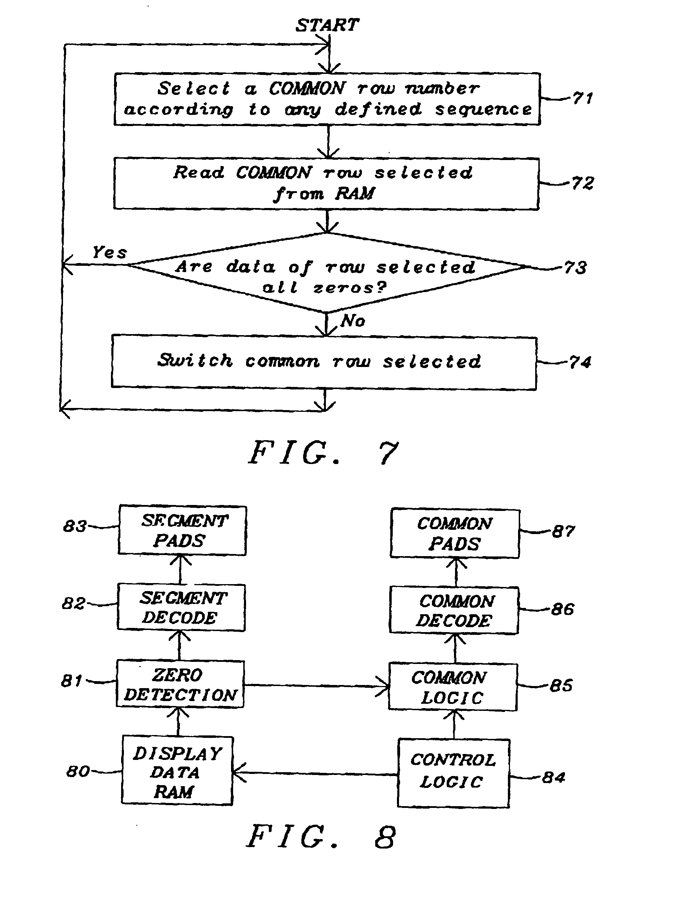

**Fig. 7** describes the logical sequence of the method how to reduce the operating power supply current of the LCD driver IC. Step **71** describes that a COMMON row is selected according to any defined sequence. Step **72** describes how the display scan sequentially reads the selected row of the RAM. Step **73** describes how a logic circuitry checks if the data in the selected row is all zero. If the data is all zeros than no pulse is sent to the selected common and the next row in the defined sequence is selected to be read. If at least one of the data is "ON" than the normal process is performed. This means, as described in step **74**, the selected common is switched and the process is repeated by selecting and reading the next common row.

**Fig. 8** describes the architecture of the system invented. A control logic block **84** is controlling the overall display of the data stored in the display data RAM **80**. A logic circuitry **81** is connected to said RAM **80**, to a segment decode block **82** and to a logic circuit block **85**. Said logic circuitry **81** detects if the data for a selected row is all zero's. Said logic circuit block **85** is controlling the output to the COMMON rows. Said COMMON logic block **85** is receiving signals from the zero detection block **81** indicating "non-zero" data in a selected COMMON row. Additionally said COMMON logic block is controlled by said control logic block **84**. A COMMON decode block **86** is receiving signals from said COMMON logic block **85** and is providing the signals to the COMMON pads **87**. A SEGMENT decode block **82** is receiving signals from said zero detection block **81** and is providing the signals to the SEGMENT pads **83**.

While the invention has been particularly shown and described with reference to the preferred embodiments thereof, it will be understood by those skilled in the art that various changes in form and details may be made without departing from the scope of the invention.

## Claims

1. A method of driving a liquid crystal display (LCD) to reduce the current consumption of a LCD driver circuit by avoiding COMMON output to LCD rows having all blanks, the system comprising a LCD, wherein the LCD comprises:
- a plurality of COMMON conducting layers,
- a plurality of SEGMENT conducting layers orthogonal to the plurality of common conducting layers,
- a matrix(1) of rows and columns of pixels created by the plurality of segment conducting layers orthogonal to the plurality of common conducting layers on either side of a liquid crystal film, and
- a driver circuit, wherein the driver circuit comprises
- a display data random access memory (RAM, 52) storing data to be displayed in the LCD for each row of pixels,
a plurality of logical OR-gates (53) adapted to detect an all-zero condition in a selected COMMON row by performing a logical OR-operation comparing the data of the selected COMMON row,
- a SEGMENT decode block (82) providing signals to the plurality of segment conducting layers,
- a COMMON decode block (86) for providing signals to the plurality of common conducting layers,
- a COMMON logic block (85) wherein its output is adapted to control said COMMON decode block (86) to provide a pulse to the common conducting layer of the selected COMMON row only in response to a signal indicating the non-zero data in the selected COMMON row at the first input of the common logic block, and
- a control logic block (84) for controlling the overall display of the data stored in said display data RAM (52),
wherein the method comprises the steps of:
- selecting (71) a row of pixels according to any defined sequence;
- reading (72) the data of the selected row of pixels from the RAM;
- checking (73) if the data of the selected row of pixels contains all zeros by inputting the data to the logical OR gates performing a logical OR-operation comparing the data of the selected row ;
- producing at an output (50) of the logical OR gates a signal indicating if a row selected contains all zero data or not;
- if the signal (50) indicates that the data of the selected row is all zero, selecting (71) the next row of pixels according to the sequence ; and
- if the signal indicates (73) that the data of the selected row of pixels is not all zero switching (74) the common conductive layer of the selected row of pixels by sending a pulse and go back to select the next row of pixels and read the data of the next row.

2. The method of claim 1 wherein said COMMON logic block (85) switches a COMMON row of pixels according to the result of a logical operation involving a signal (50) indicating if any data in said COMMON row is non-zero.

3. The method of claim 2 wherein said logical operation is comprising a logical AND-operation (62) involving a signal (50) indicating if any data in said COMMON row is non-zero and the data of the corresponding row.

4. The method of claim 1 wherein said defined sequence to read the COMMON rows is from COMMON row 1 to the last row and then said sequence is repeated continuously.

5. The method of claim 1 wherein said control logic block (85) is selecting the relevant COMMON row corresponding to the row of data in the RAM (52).

6. A system to reduce the power consumption of a liquid crystal display (LCD) driver circuit by avoiding output to LCD rows having all blanks, the system comprising an LCD, wherein the LCD comprises:
- a plurality of common conducting layers;
- a plurality of segment conducting layers orthogonal to the plurality of common conducting layers;
- a matrix (1) of rows and columns of pixels created by the plurality of segment conducting layers orthogonal to the plurality of common conducting layers on either side of a liquid crystal film; and
- the LCD driver circuit, wherein the LCD driver circuit comprises:
- a display data random access memory (RAM, 52) for storing data to be displayed on the LCD for each row of pixels being controlled by a control logic block (84) and for providing output to a plurality of logical OR-gates (53, 81);
- said control logic block (84) for controlling the overall display of the data stored in said display data RAM (52) and for selecting a COMMON row of pixels by providing information to a COMMON logic block (85) and a SEGMENT decode block (82);
- said plurality of logical OR gates (81) adapted to detect an all-zero condition in the selected COMMON row by performing a logical OR-operation comparing the data of the selected COMMON row ;
- said COMMON logic block (85) having inputs and an output wherein a first input is a signal (50) from said logical OR-gates indicating non zero data in the selected common row and a second input is from said control logic block (84) and the output is adapted to control a COMMON decode block (86) to provide a pulse to the common conducting layer of the selected COMMON row only in response to the signal (50) indicating the non-zero data in the selected COMMON row at the first input;
- a COMMON decode block (86) adapted to receive signals from said COMMON logic block (85) and to provide signals to the plurality of COMMON conductive layers ; and
- said SEGMENT decode block (82) adapted to receive signals (50) from said plurality of logical OR-gates (53, 81) indicating non-zero data in the selected common row and to provide signals to SEGMENT conducting layers of pixels.

7. The system of claim 6 wherein said COMMON logic block (85) switches a COMMON row of pixels according to the result of a logical operation involving a signal (50) indicating if any data in said COMMON row is non-zero and the data of the corresponding row.

8. The system of claim 7 wherein said logical operation is comprising a logical AND-operation (62) involving a signal (50) indicating if any data in said COMMON row is non-zero and the data of the corresponding row.

## Patentansprüche

1. Verfahren zum Treiben einer Flüssigkristallanzeige (LCD), um den Stromverbrauch eines LCD-Treiberschaltkreises mittels Vermeidens einer "COMMON"-Ausgabe zu LCD-Reihen, die nur Leerstellen haben, zu verringern, das System ein LCD aufweist, wobei das LCD aufweist.
- eine Mehrzahl von COMMON leitenden Schichten,
- eine Mehrzahl von SEGMENT leitenden Schichten, die senkrecht zur Mehrzahl von COMMON leitenden Schichten sind,
- eine Matrix (1) von Reihen und Spalten von Pixeln, die durch die Mehrzahl der COMMON leitenden Schichten auf jeder Seite eines Flüssigkristallfilms erzeugt werden, und
- eine Treiberschaltung, wobei die Treiberschaltung aufweist
- einen Anzeigedaten-Direktzugriffsspeieher (RAM, 52), der die auf dem LCD anzuzeigenden Daten für jede der Pixelreihen speichert,
- eine Mehrzahl von logischen ODER-Gattern (53), die dazu geeignet sind, einen "alles Null"-Zustand in einer ausgewählten COMMON Reihe mittels Durchführung einer logischen ODER-Operation unter Vergleichens der Daten der ausgewählten COMMON Reihe zu erkennen,
- einen SEGMENT Decoderblock (82), der Signale der Mehrzahl von SEGMENT leitenden Schichten zur Verfügung stellt,
- einen COMMON Decoderblock (86), der Signale der Mehrzahl von COMMON leitenden Schichten zur Verfügung stellt,
- einen COMMON Logikblock (85), wobei sein Ausgang geeignet ist, den COMMON Decoderblock (86) zu steuern, um einen Puls der COMMON leitenden Schicht der ausgewählten COMMON Reihe nur als Antwort auf ein Signal zur Verfügung zu stellen, das die Nicht-Null-Daten der ausgewählten COMMON Reihe bei der ersten Eingabe des COMMON Logikblocks anzeigt, und
- einen Steuer-Logikblock (84) zum Steuern der Gesamtanzeige der Daten, die in besagtem Anzeigedaten-RAM (52) gespeichert sind,
wobei das Verfahren die Schritte aufweist:
- Auswählen (71) einer Reihe von Pixeln gemäß einer beliebigen definierten Sequenz;
- Lesen (72) der Daten der ausgewählten Reihe von Pixeln aus dem RAM;
- Überprüfen (73), oh die Daten der ausgewählten Reihe von Pixeln nur Nullen enthält, mittels Eingehens der Daten in das logische ODER-Gatter, das eine logische ODER-Operation unter Vergleichens der Daten der ausgewählten Reihe durchführt;
- Erzeugen eines Signals an einem Ausgang (50) aus den logischen ODER-Gattern, das anzeigt, ob eine Reihe nur Null-Daten enthält oder nicht;
- wenn das Signal (50) anzeigt, dass die Daten der ausgewählten Reihe alle Null sind, Auswählen (71) der nächsten Reihe von Pixeln gemäß der Sequenz; und
- wenn das Signal anzeigt (73), dass die Daten der ausgewählten Reihe von Pixeln nicht alle Null sind, Schalten (74) der COMMON leitenden Schicht der ausgewählten Reihe von Pixeln mittels Sendens eines Impulses und Zurückgehen, um die nächste Reihe von Pixeln auszuwählen und die Daten der nächsten Reihe zu lesen.

2. Verfahren nach Anspruch 1, wobei besagter COMMON Logikblock (85) eine COMMON Reihe von Pixeln gemäß dem Ergebnis einer logischen Operation schaltet, die ein Signal (50) einbezieht, das anzeigt, wenn irgendwelche Daten in besagter COMMON Reihe nicht Null sind.

3. Verfahren nach Anspruch 2, wobei besagte logische Operation eine logische UND-Operation (62) aufweist, die ein Signal (50) einbezieht, das anzeigt, wenn irgendwelche Daten in besagter COMMON Reihe nicht Null sind, und die Daten der entsprechenden Reihe.

4. Verfahren nach Anspruch 1, wobei besagte definierte Sequenz, um die COMMON Reihen zu lesen, von der COMMON Reihe 1 bis zur letzten Reihe ist, und dann besagte Sequenz kontinuierlich wiederholt wird.

5. Verfahren nach Anspruch 1, wobei besagter Steuer-Logikblock (85) die relevante COMMON Reihe entsprechend der Datenreihe im RAM (52) auswählt.

6. System, um den Energieverbrauch einer Flüssigkristallanzeige (LCD) Treiberschaltung zu verringern mittels Vermeidens einer Ausgabe zu LCD-Rcihen, die nur Leerstellen haben, das System ein LCD aufweisend, wobei das LCD aufweist:
- eine Mehrzahl von COMMON leitenden Schichten;
- eine Mehrzahl von SEGMENT leitenden Schichten, die senkrecht zur Mehrzahl von COMMON leitenden Schichten sind;
- eine Matrix (1) von Reihen und Spalten von Pixeln, die durch die Mehrzahl der SEGMENT leitenden Schichten erzeugt werden, die senkrecht zu der Mehrzahl der COMMON leitenden Schichten auf jeder Seite eines Flüssigkristallfilms sind; und
- eine LCD-Treiberschaltung, wobei die LCD-Treiberschaltung aufweist:
- einen Anzeigedaten-Direktzugriffsspeicher (RAM, 52) zum Speichern der auf dem LCD anzuzeigenden Daten für jede der Pixelreihen, die durch einen Steuer-Logikblock (84) gesteuert werden, und zum zur Verfugung stellen eines Ausgangs für eine Mehrzahl von logischen ODER-Gattern (63, 81);
- besagten Logikblock (84) zum Steuern der Gesamtanzeige der in besagtem Anzeigedaten-RAM (52) gespeicherten Daten, und zum Auswählen einer COMMON Reihe von Pixeln mittels zur Verfügung stellens von Informationen an einem COMMON Logikblock (85) und einem SEGMENT Decoderblock (82);
- besagte Mehrzahl von logischen ODER-Gattern (81), die dazu geeignet sind, einen "alles Null"-Zustand in einer ausgewählten COMMON Reihe mittels Durchführung einer logischen ODER-Opcration unter Vergleichens der Daten der ausgewählten COMMON Reihe zu erkennen;
- besagten COMMON Logikblock (85) Eingänge und einen Ausgang aufweist, wobei ein erster Eingang ein Signal (50) von besagten logischen ODER-Gattern ist, das Nicht-Null-Daten in der ausgewählten COMMON Reihe anzeigt, und ein zweiter Eingang von besagtem Steuer-Logikblock (84) kommt, und der Ausgang dazu geeignet ist, einen COMMON Dekoderblock (86) zu steuern, um einen Puls der COMMON leitenden Schicht der ausgewählten COMMON Reihe nur als Antwort auf ein Signal (50) zur Verfügung zu stellen, das die Nicht-Null-Daten der ausgewählten COMMON Reihe am ersten Eingang anzeigt;
- einen COMMON Dekoderblock (86), der dazu geeignet ist, Signale von besagtem COMMON Logikblock (85) zu empfangen, und Signale der Mehrzahl der COMMON leitenden Schichten zur Verfügung zu stellen; und
- besagten SEGMENT Dekoderblock (82), der dazu geeignet ist, Signale (50) von besagter Mehrzahl von logischen ODER-Gattern (53, 81) zu empfangen, die Nicht-Null-Daten in der ausgewählten COMMON Reihe anzeigen, und um Signale den SEGMENT leitenden Schichten von Pixeln zur Verfügung zu stellen.

7. System nach Anspruch 6, wobei besagter COMMON Logikblock (85) eine COMMON Reihe von Pixeln gemäß dem Ergebnis einer logischen Operation schaltet, die ein Signal (50) einbezieht, das anzeigt, wenn irgendwelche Daten in besagter COMMON Reihe nicht Null sind, und die Daten der entsprechenden Reihe.

8. System nach Anspruch 7, wobei besagte logische Operation eine logische UND-Operation (62) aufweist, die ein Signal (50) einbezieht, das anzeigt, wenn irgendwelche Daten in besagter COMMON Reihe nicht Null sind, und die Daten der entsprechenden Reihe.

## Revendications

1. Procédé d'attaque d'un écran à cristaux liquides (LCD) afin de réduire la consommation de courant d'un circuit d' attaque d'écran LCD en évitant la sortie COMMUNE vers les rangées LCD ne comportant que des blancs, le système comprenant un écran à cristaux liquides (LCD), dans lequel l'écran LCD comprend :
- une pluralité de couches conductrices COMMUNES,
- une pluralité de couches conductrices de SEGMENT orthogonales à la pluralité de couches conductrices communes,
- une matrice (1) de rangées et de colonnes de pixels créées par la pluralité de couches conductrices de segment orthogonales à la pluralité de couches conductrices communes sur chaque côté d'une couche à cristaux liquides, et
- un circuit d'attaque, dans lequel le circuit d'attaque comprend
- une mémoire vive de données d'affichage (RAM, 52) stockant des données à afficher sur l'écran LCD pour chaque rangée de pixels,
une pluralité de portes logiques OU (53) adaptées pour détecter une condition ne comportant que des zéros dans une rangée COMMUNE sélectionnée en exécutant une opération logique OU comparant les données de la rangée COMMUNE sélectionnée,
- un bloc de décodage de SEGMENT (82) fournissant des signaux à la pluralité de couches conductrices de segment,
- un bloc de décodage COMMUN (86) pour fournir des signaux à la pluralité de couches conductrices communes,
- un bloc logique COMMUN (85) dans lequel sa sortie est adaptée pour commander ledit bloc de décodage COMMUN (86) afin de fournir une impulsion à la couche conductrice commune de la rangée COMMUNE sélectionnée uniquement en réponse à un signal indiquant les données non nulles dans la rangée COMMUNE sélectionnée au niveau de la première entrée du bloc logique commun, et
- un bloc logique de commande (84) destiné à commander l'affichage global des données stockées dans ladite mémoire vive de données d'affichage (52),
dans lequel le procédé comprend les étapes consistant à :
- sélectionner (71) une rangée de pixels selon une quelconque séquence définie ;
- lire (72) les données de la rangée sélectionnée de pixels provenant de la mémoire vive ;
- contrôler (73) si les données de la rangée sélectionnée de pixels ne comportent que des zéros en fournissant en entrée les données aux portes logiques OU exécutant une opération logique OU comparant les données de la rangée sélectionnée ;
- produire au niveau d'une sortie (50) des portes logiques OU un signal indiquant si une rangée sélectionnée contient des données ne comportant que des zéros ou non ;
- si le signal (50) indique que les données de la rangée sélectionnée ne comporte que des zéros, sélectionner (71) la rangée suivante de pixels selon la séquence ; et
- si le signal indique (73) que les données de la rangée sélectionnée de pixels ne comporte pas que des zéros, commuter (74) la couche conductrice commune de la rangée sélectionnée de pixels en envoyant une impulsion et revenir pour sélectionner la rangée suivante de pixels et lire les données de la rangée suivante.

2. Procédé selon la revendication 1 dans lequel ledit bloc logique COMMUN (85) commute une rangée COMMUNE de pixels selon le résultat d'une opération logique impliquant un signal (50) indiquant si une quelconque donnée dans ladite rangée COMMUNE, est non nulle.

3. Procédé selon la revendication 2 dans lequel ladite opération logique comprend une opération logique ET (62) impliquant un signal (50) indiquant si une quelconque donnée dans ladite rangée COMMUNE est non nulle et les données de la rangée correspondante.

4. Procédé selon la revendication 1 dans lequel ladite séquence définie pour lire les rangées COMMUNES part de la rangée COMMUNE 1 jusqu'à la dernière rangée et ensuite ladite séquence est répétée de façon continue.

5. Procédé selon la revendication 1 dans lequel ledit bloc logique de commande (85) sélectionne la rangée COMMUNE pertinente correspondant à la rangée de données dans la mémoire vive (52).

6. Système destiné à réduire la consommation d'énergie d'un circuit d'attaque d'écran à cristaux liquides (LCD) en évitant la sortie vers les rangées LCD ne comportant que des blancs, le système comprenant un écran LCD, dans lequel l'écran LCD comprend :
- une pluralité de couches conductrices communes ;
- une pluralité de couches conductrices de segment orthogonales à la pluralité de couches conductrices communes ;
- une matrice (1) de rangées et de colonnes de pixels créées par la pluralité de couches conductrices de segment orthogonales à la pluralité de couches conductrices communes sur chaque côté d'une couche à cristaux liquides ; et
- le circuit d'attaque d'écran LCD, dans lequel le circuit d'attaque d'écran LCD comprend :
- une mémoire vive de données d'affichage (RAM, 52) destinée à stocker des données à afficher sur l'écran LCD pour chaque rangée de pixels étant commandée par un bloc logique de commande (84) et destinée à fournir la sortie vers une pluralité de portes logiques OU (53 ; 81) ;
- ledit bloc logique de commande (84) destiné à commander l'affichage global des données stockées dans ladite mémoire vive de données d'affichage (52) et à sélectionner une rangée COMMUNE de pixels en fournissant des informations sur un bloc logique COMMUN (85) et un bloc de décodage de SEGMENT (82) ;
- ladite pluralité de portes logiques OU (81) adaptée pour détecter une condition ne comportant que des zéros dans la rangée COMMUNE sélectionnée en exécutant une opération logique OU comparant les données de la rangée COMMUNE sélectionnée ;
- ledit bloc logique COMMUN (85) ayant des entrées et une sortie dans lesquelles une première entrée est un signal (50) provenant desdites portes logiques OU indiquant des données non nulles dans la rangée commune sélectionnée et une seconde entrée provient dudit bloc logique de commande (84) et la sortie est adaptée pour commander un bloc de décodage COMMUN (86) afin de fournir une impulsion à la couche conductrice commune de la rangée COMMUNE sélectionnée en réponse au signal (50) indiquant les données non nulles dans la rangée COMMUNE sélectionnée au niveau de la première entrée ;
- un bloc de décodage COMMUN (86) adapté pour recevoir des signaux provenant dudit bloc logique COMMUN (85) et pour fournir des signaux à la pluralité de couches conductrices communes ; et
- ledit bloc de décodage de SEGMENT (82) adapté pour recevoir des signaux (50) provenant de ladite pluralité de portes logiques OU (53, 81) indiquant des données non nulles dans la rangée commune sélectionnée et pour fournir des signaux aux couches conductrices de SEGMENT de pixels.

7. Système selon la revendication 6 dans lequel ledit bloc logique COMMUN (85) commute une rangée COMMUNE de pixels selon le résultat d'une opération logique impliquant un signal (50) indiquant si une quelconque donnée dans ladite rangée COMMUNE est non nulle et les données de la rangée correspondante.

8. Système selon la revendication 7 dans lequel ladite opération logique comprend une opération logique ET (62) impliquant un signal (50) indiquant si une quelconque donnée dans ladite rangée COMMUNE est non nulle et les données de la rangée correspondante.
